# EUROPEAN PATENT APPLICATION

(11) **EP 4 815 232 A1**
(43) Date of publication of application: **30.09.2026**
(21) Application number: 25165644.3
(22) Date of filing: 24.03.2025
(51) Int. Cl.: H02G 15/18, B29C 61/02

(54) **INSULATING HOUSING FOR PROVIDING HEAT INSULATION AND INSTALLATION KIT**

(71) Applicant: TE Connectivity Solutions GmbH, 8200 Schaffhausen (CH)
(72) Inventor: HEINDL, Christian, Schaffhausen (CH); KEHL, Ladislaus, Schaffhausen (CH); LAGDEN, Russell, Schaffhausen (CH); LUDWICZAK, Magdalena, Schaffhausen (CH); OLIVEIRA, Patricia, Schaffhausen (CH)
(74) Representative: Grünecker Patent- und Rechtsanwälte PartG mbB

(57) **Abstract**

Insulating housing (100) for providing a heat insulation around a cable (190). The insulating housing (100) comprises a main body (110) having a plurality of longitudinal grooves (111) along a longitudinal axis (102) of the main body (110) and further comprises two peripheral regions (120). The main body (110) is arranged between the peripheral regions (120), and the insulating housing (100) is foldable along the plurality of longitudinal grooves (111) to form an enclosure. Each peripheral region (120) is configured to contact the cable (190). Further, an installation kit (140) for installing a heat shrink sleeve (170) is provided. The installation kit (140) comprises the insulating housing (100), a heat shrink sleeve (170), a heating unit (174), and a control unit (176) arranged at a base plate (178).

## Description

The present invention relates to an insulating housing for providing heat insulation around a cable and relates to an installation kit for installing and transporting the insulating housing together with a heat shrink sleeve and a heating unit.

In particular, the invention relates to an improved tool for the installation of heat-shrink sleeves onto cables, particularly in field environments where controlled and efficient heat application is necessary. The invention ensures that the installation process is simplified, consistent, and safe, addressing challenges associated with applying heat-shrink sleeves in various locations and conditions. Additionally, the tool is designed to be easily transportable and deployable, making it suitable for diverse installation scenarios.

Heat-shrink sleeves are widely used for protecting and insulating cable connections, but their installation process presents several challenges. To ensure a proper fit, the heat-shrink sleeve must be heated evenly so that it conforms tightly around the cable joint. However, achieving a controlled and uniform heat application in field environments-where conditions vary, and accessibility is often limited-can be difficult.

One of the primary concerns during installation is the efficient management of heat application, which is directly impacted by thermal insulation. If heat is not properly contained and uniformly directed, heat dissipation can lead to uneven shrinkage, excessive energy consumption, or prolonged installation times. Conventional insulation tools used for heat-shrink sleeve installation often lack effective thermal insulation, leading to inefficient heat transfer, and increased power requirements.

Furthermore, installation tools must be designed for global deployment, meaning they should be lightweight, portable, and durable while still ensuring optimal thermal efficiency. Many existing solutions fail to address this balance, resulting in cumbersome equipment that is difficult to use in remote or constrained locations.

The present invention overcomes these issues by introducing an insulating housing that enables precise, thermally efficient, and easily manageable heat insulation around a cable. By incorporating effective thermal insulation and a uniform heat distribution, the housing minimizes heat loss and maximizes heating efficiency, ensuring that a heat shrink sleeve can be installed.

It is therefore an object of the present disclosure to provide an improved insulating housing and corresponding installation kit that provide an efficient heat insulation around a cable.

This problem is solved by the subject-matter of the independent claims. Advantageous examples of the present disclosure are the subject-matter of the dependent claims.

In particular, an insulating housing for providing a heat insulation around a cable is provided. The insulating housing comprises a main body having a plurality of longitudinal grooves along a longitudinal axis of the main body. The insulating housing also comprises two peripheral regions, and the main body is arranged between the peripheral regions. The insulating housing is foldable along the plurality of longitudinal grooves to form an enclosure and each peripheral region is configured to contact the cable.

The peripheral regions advantageously directly contact the cable, effectively sealing the enclosure formed by the insulating housing while simultaneously centering it around the cable. This enhances the provided heat insulation and ensures a uniform heat distribution.

According to an advantageous further development of the present disclosure, the main body comprises two overlap regions arranged at opposite edges and extending along the longitudinal axis of the main body. The two overlap region facilitate the closing of the folded insulating housing.

According to an advantageous further development of the present disclosure, the insulating housing is foldable such that the two overlap regions of the main body engage with each other and form an opening along the longitudinal axis at each peripheral region.

Advantageously, the opening can be used to look at the cable which is enclosed by the insulating housing. This facilitates the aligning of the insulating housing with respect to the cable or any other component that is to be enclosed by the insulating housing.

According to an advantageous further development of the present disclosure, the insulating housing is foldable to form a polygonal cross-section having a first diameter perpendicular to the longitudinal axis of the main body.

According to an advantageous further development of the present disclosure, the peripheral regions are contractible to contact the cable. Advantageously, the peripheral regions, in a contracted state, have at least one segment with a smaller diameter than the first diameter of the main body. By contracting the peripheral regions, the insulating housing is advantageously centered around the cable, ensuring a consistent distance from its circumference. This precise alignment enables uniform heat distribution around the cable, optimizing the installation process.

According to an advantageous further development of the present disclosure, each peripheral region is formed with a plurality of cut-outs. Advantageously, each peripheral region has a plurality of diamond shaped cut-outs. Advantageously, each peripheral region is in the form of a cap. Advantageously, each peripheral region is in the form of a plurality of tongues extending along the longitudinal axis of the main body.

According to an advantageous further development of the present disclosure, the insulating housing includes at least one distancing element arranged at one overlap region of the main body. Advantageously, the at least one distancing element is formed from a plurality of layers.

According to an advantageous further development of the present disclosure, the insulating housing includes a slit at one overlap region of the main body. Advantageously, the slit is in the form of a T-slit. The slit facilitates the passing of components such as cables from the inside of the insulating housing to the outside.

According to an advantageous further development of the present disclosure, locking elements are positioned on opposite edges of the main body. Each locking element includes a body and a liftable tab extending from the body. The liftable tab is configured to form a gap between the liftable tab and the body to receive a component to be locked. Via the locking elements, one or more components that are arranged within the insulating housing can be secured.

According to an advantageous further development of the present disclosure, the insulating housing comprises cardboards or corrugated plastic boards. Cardboards present an environmentally friendly and lightweight material that provides sufficient stability while remaining foldable. Similarly, corrugated plastic boards serve as a durable yet flexible alternative to cardboard.

The invention also relates to an installation kit for installing a heat shrink sleeve. The installation kit comprises an insulating housing according to the present invention and also comprises a heat shrink sleeve, a heating unit and a control unit arranged at a base plate. The insulating housing preferably encloses the heat shrink sleeve and the heating unit. The heating unit is arranged along an outer surface of the heat shrink sleeve. The heating unit is electrically energizable by the control unit to provide heat to the heat shrink sleeve.

The installation kit is usable for installing medium voltage (MV) heat shrink sleeves, but may also be advantageous for providing an insulation covering other components. In particular, the installation kit may be employed for installing heat shrink sleeves so-called rejacketing sleeves or joint bodies as well as in principle all kinds of heat shrink sleeves such as terminations and cover sleeves as well as molded products like sheds, breakouts, boots and caps. Heat shrink sleeves in the sense of the present invention relate to articles that are made from material which shrinks from an expanded state into a shrunk state with a much smaller diameter by applying a sufficient amount of heat.

The heat shrink sleeve which is installed according to the present invention, is intended to be used with voltages above approximately 1 kV. In particular, the term high-voltage in the context of the present invention is intended to comprise the usual nominal voltage ranges of power transmission, namely medium voltage, MV, (about 3 kV to about 72 kV), high-voltage, HV, (about 72 kV to about 245 kV), and also extra high-voltage (up to presently about 500 kV). Of course, also higher voltages may be considered in the future. These voltages may be direct current (DC) or alternating current (AC) voltages. The present invention is also applicable to the so-called "low-voltage", LV, range that relates to voltages below 1 kV. The principles of the present invention may further be applied to heat shrink products used for electronic applications, piping and construction applications and further more.

The expression "sleeve" according to the present invention is intended to signify straight tube shaped sleeves as well as differently shaped covers for branch joints, elbows, bends, breakouts, wrap-arounds, sheds, and the like. Moreover, the term "heat shrink sleeve" is intended to comprise such a product which has at least one heat shrink layer, so that the heat shrink sleeve is heat-recoverable. In other words, a heat shrink sleeve may be partly or completely formed from a heat-recoverable material.

According to an advantageous further development of the present disclosure, the base plate is fixed to the at least one distancing element of the insulating housing. In this way, the base plate is advantageously distanced from the outer surface of the insulating housing minimizing temperature effects on the control unit mounted on the base plate.

According to an advantageous further development of the present disclosure, the installation kit includes a box for transporting. The box includes a holding element. A compressible structure is attachable to the insulating housing and is arranged around at least a part of the insulating housing to encompass the control unit. During transportation, the compressible structure engages with the holding element to secure the insulating housing against axial movements within the box. This preferably protects the insulating housing against a deformation that can be caused from transportation or storage.

According to an advantageous further development of the present disclosure, during transportation, the installation kit includes at least one shape holder that at least partially encompasses the perimeter of the outer surface of the insulating housing to prevent a deformation of the insulating housing. Advantageously, the shape holder is channel-shaped. Advantageously, the shape holder has a circular shape. Advantageously, the shape holder has a hexagonal shape. Advantageously, the shape holder has a rectangular shape.

To better understand the present disclosure, this is explained in greater detail using the example depicted in the following Figures. Identical parts are hereby provided with identical reference numbers and identical component names. Furthermore, some features or combinations of features from the various examples shown and described may also represent independent solutions, inventive solutions or solutions according to the disclosure. In the drawings:
- **Fig. 1**: shows an insulating housing according to the present disclosure in a flat state,
- **Fig. 2**: shows a detailed view on a slit of the insulating housing according to one example,
- **Fig. 3**: shows the insulating housing according to one example in a folded state,
- **Fig. 4**: shows a section of the insulating housing according to one example in a folded state,
- **Fig. 5 and 6**: show examples of the peripheral regions according to the present disclosure,
- **Fig. 7**: shows the insulating housing with locking elements in a flat state according to one example,
- **Fig. 8**: shows a closer view on the locking element according to one example,
- **Fig. 9**: shows the insulating housing with locking elements in a folded state according to one example,
- **Fig. 10**: shows the installation kit according to one example,
- **Fig. 11**: shows another example the installation kit,
- **Fig. 12**: shows a detailed view on the base plate according to one example,
- **Fig. 13**: shows the mounted base plate according to one example,
- **Fig. 14**: shows an example of the box used for transportation,
- **Fig. 15**: shows an example of the installation kit in the box used for transportation,
- **Fig. 16**: shows a side view on the installation kit according to in example,
- **Fig. 17**: shows a side view on the installation kit with shape holders according to in example,
- **Fig. 18**: shows a detailed view of shape holders according to another example,
- **Fig. 19**: shows a view on the connection area between two cables,
- **Fig. 20**: shows a view on the installation kit in use according to one example,

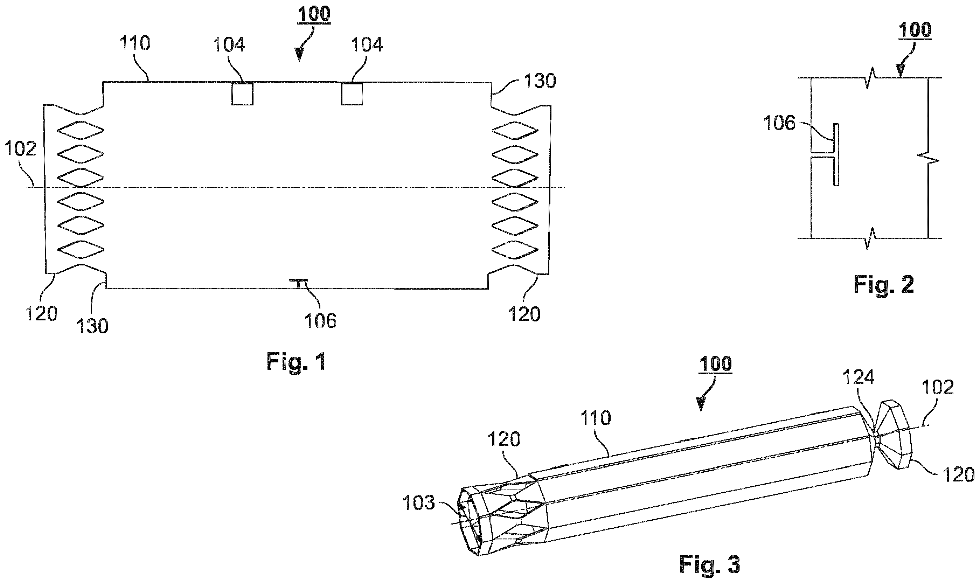

**Fig. 1** shows an insulating housing 100 according to one example of the present invention.

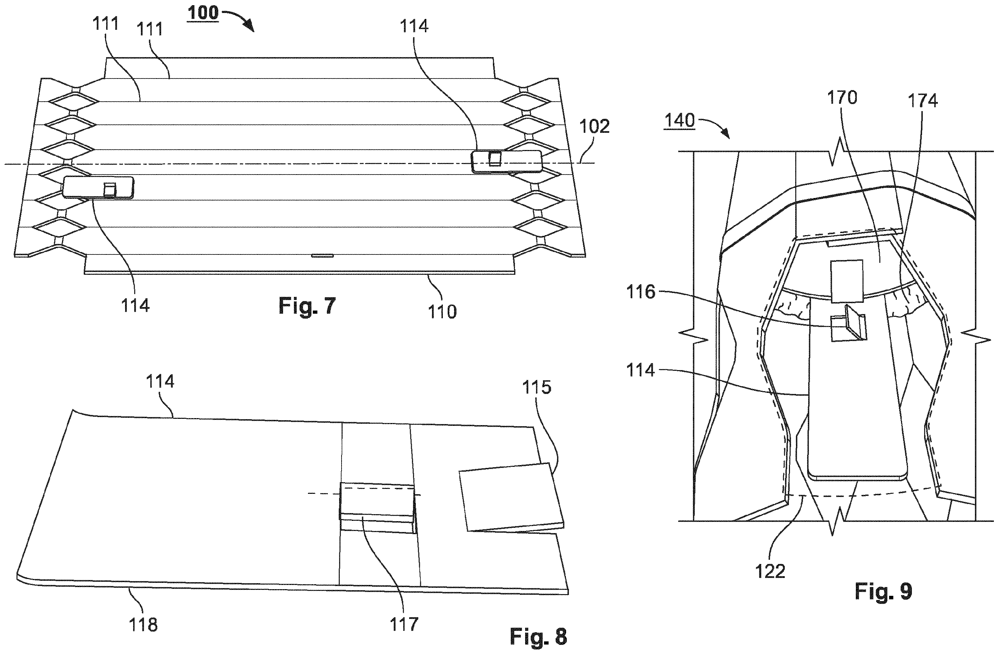

The insulating housing 100 as shown comprises a main body 110 that exemplarily has a rectangular shape and comprises two peripheral regions 120. The main body 110 is arranged between the two peripheral regions 120. In Fig.1, the housing 100 is shown in a flat state. The insulating housing 100 is foldable to form an enclosure. For example, the insulating housing can be folded into a polygonal shape as will be explained in details later. To improve the folding and the flexibility of the housing 100, the main body may have a plurality of longitudinal grooves 110 along a longitudinal axis 102. The grooves improve the flexibility of the housing when being folded. The main body 110 with the grooves 111 is exemplarily shown in Fig. 7. When the insulating housing 100 is folded, it is folded along the plurality of grooves 111.

Such an insulating housing 100 is preferably used to provide a heat insulation around a cable. The peripheral regions are designed to contact the cable and thus provide a complete enclosure around the cable that insulates the heat around the cable. In a preferred application, the insulating housing is used together with a heating unit and a heat shrink sleeve. The insulating housing insulates the heat provided by the heating unit to improve the shrinking of the heat shrink sleeve. Further details on such an application will be explained below.

The insulating housing 100 according to the present invention can be fabricated from cardboards, in particular, from several cardboard layers or may be fabricated from corrugated plastic boards. Other materials that may be used to provide a heat insulation can also be used.

As shown in Fig.1, the main region 110 may comprise two overlap regions 130 arranged at opposite edges and extending along the longitudinal axis 102 of the main body 110.

In Fig. 1, the two overlap regions 130 are shown as being in the form of a continuous strip on each edge of the main body extending along the longitudinal axis 102 and as being formed in one piece with the main body. In particular, one overlap region 130 is the part of the main body 110 that extends beyond the peripheral region 120 on each side of the main body 110. The overlap region extends beyond the peripheral region in one dimension being perpendicular to the longitudinal axis 102. Furthermore, the two overlap regions can be either the same size or different sizes, with one being larger than the other. The overlap regions 130 according to the invention can be formed one-piece with the main body 110 or can be separately attached to the main body.

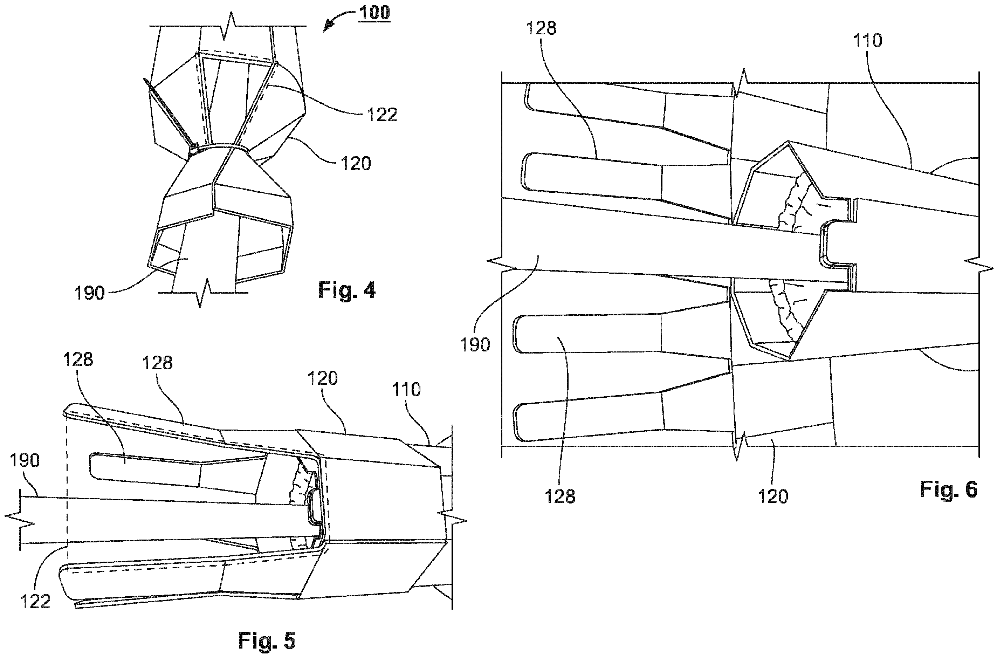

The overlap regions 130 facilitate the closing of the insulating housing, when the same is folded to form the enclosure. This ensures that the housing 100 provides a complete and efficient heat insulation around the cable. When the insulating housing is folded, the two overlap regions engage with each other while an opening 122 is formed along the longitudinal axis 102 at each peripheral region 120. Such an opening 122 at one peripheral region 120 is exemplarily shown in Fig. 4, 5 and 9 and its exact functionality is given below.

Advantageously, one or both overlap regions 130 include a slit 106. Such a slit 106 is also shown in Fig. 1 and shown in more details in **Fig. 2****.** Exemplarily, the slit is shown in the form of a T-slit, but other forms such as an upside-down U-shaped slit or an L-shaped slit can also be used. The slit aims to guide cables of a component that is arranged inside the folded insulating housing 100 to the outside. This feature enables the cables to pass through one overlap region rather than being routed around both, allowing the use of shorter cables.

As a result, the insulating housing achieves a tighter closing at the overlap regions, minimizing potential heat dissipation through any gaps.

During use, when the insulation housing 100 is folded, the folded insulating housing 100 forms a polygonal cross-section. Such an example, is shown in **Fig. 3 - 6** **and** **14.** The folded insulating housing 100 has a first diameter 103 perpendicular to the longitudinal axis 102 of the main body 110. Depending on the number of longitudinal grooves 111 at the main body 110, the exact shape of the folded insulating housing 110 may vary. In the Figures, the housing 100 is exemplarily folded into an octagonal shape.

Some preferred elements of the insulating housing have been described in a general context so far. In the following, further details on features of the insulation housing will be given.

The following features and aspects will be described with respect to one peripheral region 120. However, it is clear that the same applies for the second peripheral region. The two peripheral regions preferably have the same form and features, but this may also be changed such that each peripheral region is formed differently.

The peripheral region 120 is formed to be contractible to contact the cable 190 (Fig. 4). Thus, the peripheral region 120 according to this invention, is the part of the housing that can be contracted, while the main body is not contractible. Meaning that when the insulating housing 100 is arranged around the cable and folded, the peripheral region 120 can be contracted until it contacts the cable and the enclosure formed by the insulation housing around the cable is closed. This is further referred to as a contracted state. In the contracted state, at least one segment 124 of the peripheral region 120 has a smaller diameter than the first diameter 103 of the main body 110. The segment with the smaller diameter tightly encloses the cable 190. This ensures that the folded housing also insulates along its ends. The contraction can be fixed by a cable tie to ensure the tight fit around the cable.

Additionally, the peripheral regions 120, when in a contracted state, center the insulating housing 100 around the cable 190. By contracting the peripheral region so that at least one segment makes direct contact with the cable, the insulating housing is positioned at a uniform distance from the cable's circumference in all directions, ensuring precise alignment. As a result, the housing maintains an evenly distributed spacing around the cable, which in turn facilitates uniform heat distribution within the insulating housing.

Each peripheral region preferably has a plurality of cut-outs. An example for such cut-outs is shown in Fig. 1. In this example, the peripheral region 120 has a plurality of diamond-shaped cut-outs. Thereby, the exact dimensions of the cut-outs can be varied. The cut-outs of the peripheral region facilitate the contraction of the peripheral region 120, particularly in such a way that a flush closure is formed around the cable.

**Fig. 3** **and** **4** show exemplarily a contracted peripheral region 120 with the plurality of diamond-shaped cut-outs. Fig. 3 shows a folded insulating housing 100 having one peripheral region shown in a non-contracted state (left-side) and one peripheral region being in the contracted state (right side). At the peripheral region in the non-contracted state, the diamond-shaped cut-outs are visible. When such a peripheral region is contracted, the peripheral region preferably forms a candy shaped end. The peripheral region with the plurality of cut-outs is contracted such that the segments of the peripheral region get in contact with the neighboring segments and form a closed enclosure around the cable. Fig. 4 shows further details of such a contracted peripheral region having a candy shape.

As can be seen, the insulation housing 100 is arranged around a cable 190 and the contracted segment 124 of the peripheral region 120 is tightly fixed by a cable tie. The contracted peripheral region advantageously seals the otherwise open ends of the insulating housing due to the housing having a larger first diameter 103 as the diameter of the cable 190. This aligns the insulating housing 100 evenly spaced around the cable such that a uniform heat distribution can be provided. The amount of contraction of the peripheral region or of the segment 124 of the peripheral region 120 can be adapted or varied depending on the diameter of the cable 190.

So far, the peripheral regions 120 have been shown as being formed one-piece with the remainder of the insulating housing 100 such as the main body 110. The peripheral region may also be separately formed and attached to the main body by attaching means such as glue or a stapler.

A variant of the peripheral region 120 is shown with respect to **Fig. 5 and 6****.**

Here, the peripheral region is in the form of a plurality of tongues 128 extending along the longitudinal axis 102 of the main body 110. Fig. 6 shows the peripheral region 120 as a separate piece having a plurality of tongues 128 fixed to the main body 110 by glue. Further, it is shown that the peripheral region 120 may be fixed to the main body after the housing is folded around the cable 190. When the peripheral region 120 is formed as separate piece, the peripheral region also comprises two overlap regions that engage with each other when the peripheral region is fixed to the main body and folded around the cable 190. The overlap regions ensure a fixation of the folded housing with the peripheral regions around the cable and also enable that the insulating housing 100 provides the opening 122 along the longitudinal axis 102. Fig. 5 shows the peripheral region 120 formed by tongues arranged around the cable 190.

The plurality of tongues are contractible until the plurality of tongues contact the cable 190 and fit precisely around the outer circumference of the cable 190 ensuring a centering of the housing. Similarly, as shown in Fig. 4, the contracted tongues may also be fixed by a cable tie.

Fig. 4 and 5 exemplarily also show the opening 122 provided at the peripheral region 120. The heat insulation provided by the otherwise closed enclosure around the cable 190 is still sufficient to reach temperatures around 300 degree within the insulating housing. Further details on the opening are described below. If a complete heat insulation is required, for example, due to higher temperatures demands inside the insulating housing, the peripheral regions can be designed without the opening 122, forming a complete enclosure around the cable 190.

In another variation of the peripheral region, the peripheral region is formed as a cap (not shown). The cap is attached to both edges of the main body 110 after the insulating housing is folded. The cap includes an opening through which the cable 190 passes. When the cable reaches through the opening of the cap, the insulating housing is again centered with respect to the cable such that a uniform heat distribution is achieved. Further, such a cap also provides a closed enclosure around the cable 190 and improves the heat insulation.

The described examples of the peripheral region all advantageously align the insulating housing 100 that is positioned around the cable 190 centered to this cable. Meaning that by contracting the peripheral region such that at least one segment contacts the cable, the insulating housing has the same distance to the circumference of the cable in all directions. This allows that the heat inside insulating the insulating housing is also evenly spaced around the cable.

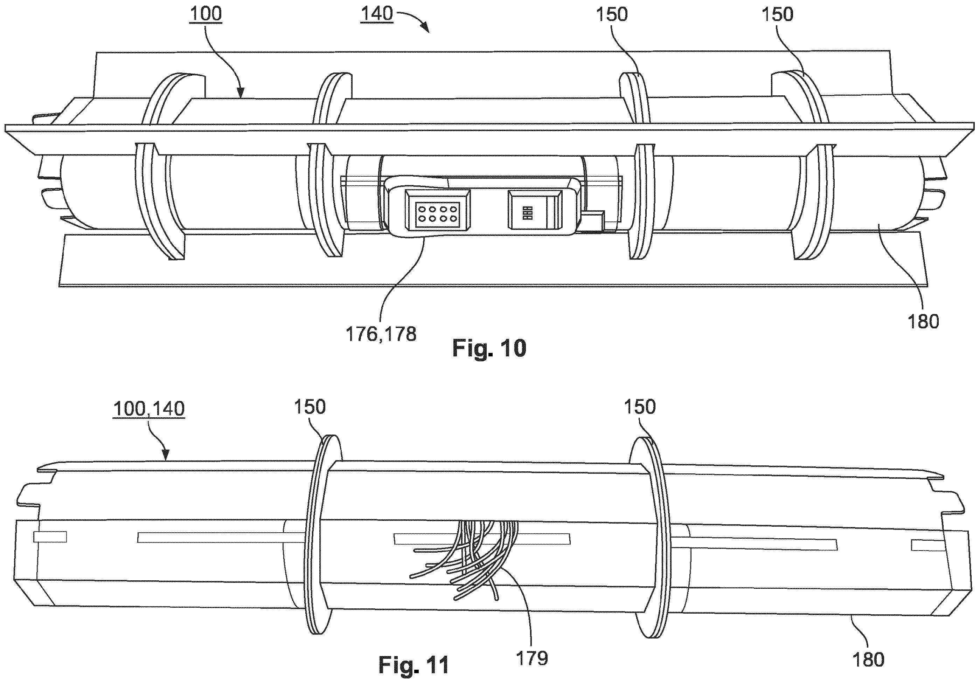

The insulating housing is preferably used for installing a heat shrink sleeve around the cable 190. The heat shrink sleeve is shrunken into position around the cable by a portable heating unit. In one example, the insulating housing 100 is used and transported as part of an installation kit. The installation kit 140 is exemplarily shown in **Fig. 10 and 11** and comprises the insulating housing 100, the heat shrink sleeve 170, the heating unit 174 and further components that will be described later.

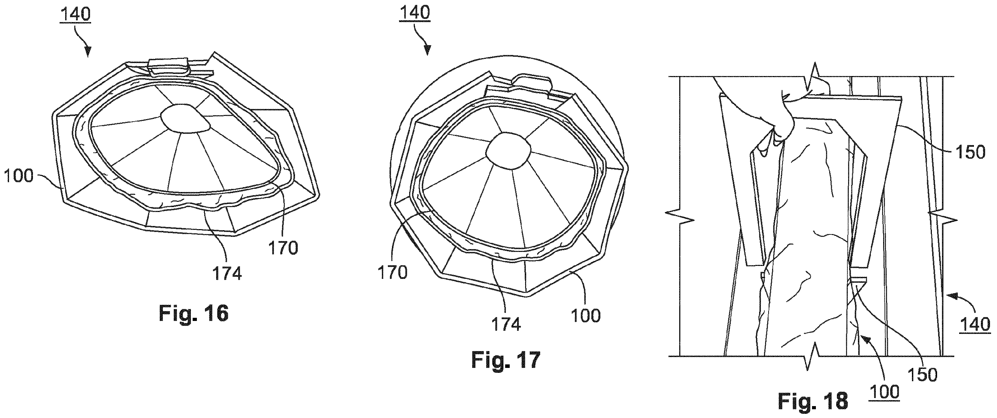

Thereby, the heating unit 174 and the heat shrink sleeve 170 can be positioned inside of the insulating housing 100. Speaking differently, when the insulating housing 100 is folded, it encloses both components whereby the heating unit 174 is arranged along an outer surface of the heat shrink sleeve 170. Such an arrangement can be seen in Fig. 16 and 17. The folded insulating housing 100 together with the heating unit 174 and the heat shrink sleeve 170 forms a tube that can be positioned over the cable 190.

When the installation kit 140 is positioned around the cable 190, a contraction of the peripheral regions 120 of the insulating housing 100 has the effect that not only the insulating housing but also the heating unit 174 and the heat shrink sleeve 170 are centered to the cable. Thus, all three components, 100, 170, 174 are evenly spaced around the cable 190. This ensures a uniform heat distribution that improves the shrinking and, in particular, a uniform shrinking of the heat shrink sleeve.

Besides of aligning the position of the installation kit 140 around the cable 190, it is also advantageous if the position of the heating unit 174 and the heat shrink sleeve 170 within the insulating housing 100 and, in particular, with respect to the length of the housing, is aligned.

For this purpose, the insulating housing 100 of the present invention may include locking elements that are shown and described in detail with respect to **Fig. 7 - 9****.**

Fig. 7 shows the insulating housing 100 unfolded in a flat state. The locking elements 114 may be positioned on opposite edges of the main body 110. The two locking elements 114 can be positioned symmetrically along the longitudinal axis 102 of the main body 110 or can be positioned offset from the axis 102 and from each other. Such an example is shown in Fig. 7 where one locking element 114 is positioned offset from the other locking element. The locking elements 114 are preferably positioned between two longitudinal grooves 111 such that the folding of the insulating housing 100 is not affected.

The locking elements 114 are separate pieces that are fixed to the main body 110 by the following. Each locking element 114 comprises a body 118 with a flap 117 as shown in Fig. 8. The flap can be opened and closed and gives access to an opening in the locking element 114. The main body 110 of the insulating housing 100 comprises a protrusion 116 in the form of a tab at the position where the locking element 114 should be placed. The protrusion 116 reaches through the opening formed by the flap 117, the flap 117 is folded and engages with the protrusion 116 such that the locking element is secured to the main body 110. The locking element 114 may also be removed again by disengaging the protrusion from the opening of the flap 117.

The locking element 114 further comprises a liftable tab 115 extending from the body 118. The liftable tab is arranged at one end of the locking element 114 and is used to secure the heat shrink sleeve 170 and the heating unit 174 to the insulating housing 100.

As indicated in Fig. 8, the liftable tab 115 can be lifted such that a gap occurs between the lifted tab 115 and the remaining body 118. In particular, the liftable tab 115 is positioned at one end of the locking element 114 such that it is encompassed on three sides by the body 118 of the locking element 114. That means the locking element is positioned such that two non liftable segments of the body 118 are positioned next to the liftable tab 115 and the gap formed between lifted and non-lifted parts of the locking element 114 form a receptacle used to receive a component that is to be locked.

This locking can be seen in Fig. 9. As mentioned, the heating unit 174 is arranged along an outer surface of the heat shrink sleeve 170. The heating unit 174 preferably is longer than the heat shrink sleeve 170 such that the heat shrink sleeve 170 can be heated along its complete length.

The heating unit 174 is locked between the main body 110 of the housing 100 and the locking element 114. Meaning that the heating unit 174 is slid underneath at least a part of the locking element 114. The heat shrink sleeve 170 is the component that is received by the gap or receptacle that is formed by the liftable tab 115 and the (non-lifted) remaining body 118. This secures, both the heating unit 174 and the heat shrink sleeve 170 independently from each other to the insulating housing. Thus, the locking elements avoid that the heating unit 174 and the heat shrink sleeve 170 slip inside the housing 100 along the longitudinal axis 102.

This advantageously also improves the heat insulation and specifically ensures that the heat shrink sleeve is efficiently heated and installed. A misalignment of the heating unit 174 and the heat shrink sleeve 170 inside of the housing 100 may cause that one or both components 170, 174 slip to one end of the housing 100, which then might affect the closing of the peripheral regions around the cable 190 onto which the heat shrink sleeve is to be mounted. If the peripheral regions 120 cannot be contracted anymore, the centering of the insulating housing might be affected. Additionally, the contracted segment of the peripheral region 120 might not tightly enclose the cable, which can result in heat loss and in an uneven heating of the heat shrink sleeve 170.

In the following further components of the installation kit and, in particular, the transportation of the insulating housing will be described.

As mentioned above, the installation kit 140, as for example shown in Fig. 16 and 17, comprises the insulating housing 100, the heat shrink sleeve 170 and the heating unit 174. The kit 140 may also comprise a control unit 176 that is arranged at a base plate 178. As exemplarily shown in Fig. 10, the control unit 176 is positioned via the base plate 178 at the outer surface of the folded insulating housing 100. Fig. 10 also shows further components of the installation kit 140, which are described below. For simplicity, Fig. 10 and Fig. 11 are shown without peripheral regions arranged at the insulating housing.

The control unit 176 is used to electrically energize the heating unit 174 to provide heat to the heat shrink sleeve 170. Therefore, the control unit 176 is connected to the heating unit 174 by cables 179. When the insulating housing 100 also includes the above-mentioned slit 106, the cables 179 may pass through the slit from the heating unit 174 to the control unit 176. This advantageously allows that the housing provides an improved heat insulation and is not affected by a small opening caused by the passing of the cables 179. The cables 179 reaching from the inside of the insulating housing 100 to the outside to be connected with the control unit is exemplarily shown in Fig. 11.

The base plate 178 is preferably fixed to the outer surface of the insulating housing. It was realized that when the base plate 178 with the mounted control unit 176 is directly attached to the outer surface of the insulating housing 100, the control unit might be subject to a temperature increase. Although the insulating housing provides an improved heat insulation, a slight temperature increase at the outer surface of the insulating housing can still occur. Such a temperature increase might negatively affect the electronic components on the control unit. To reduce the possibility that the electronics are affected by a temperature increase, the insulating housing 100 of the present invention can include distancing elements.

The distancing elements are used to protect the components of the control unit from overheating while higher temperatures can be reached inside the insulating housing.

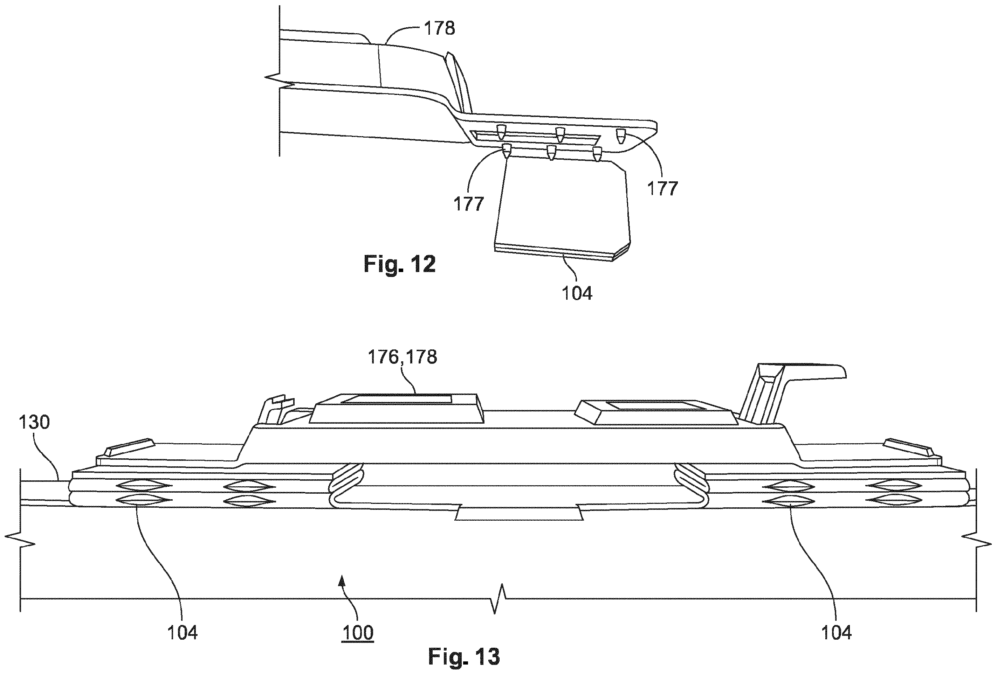

An example for the distancing element 104 is shown in **Fig. 12 and 13****.** The distancing element 104 is preferably made of the same material as the insulating housing 100. At least one distancing element 104 is arranged at the overlap region 130 of the main body 110. In particular, the distancing element 104 is positioned at one overlap region 130 such that when the insulating housing 100 is folded, the distancing element 104 is positioned at the outer surface of the housing 100. Fig. 13 exemplarily shows two distancing elements 104 onto which the base plate 178 is mounted. The base plate 178 can be fixed to the distancing element 104 by sharp projections 177 that pierce the distancing element 104 (shown in Fig. 12). Alternatively, only one distancing element 104 may be provided and the base plate 178 is only fixed to this one distancing element. As shown in Fig. 13, the at least one distancing element 104 may be formed from a plurality of layers. The number of layers can be varied depending on the required distance that should be met between the outer surface of the insulating housing 100 and the base plate 178 with the control unit 176.

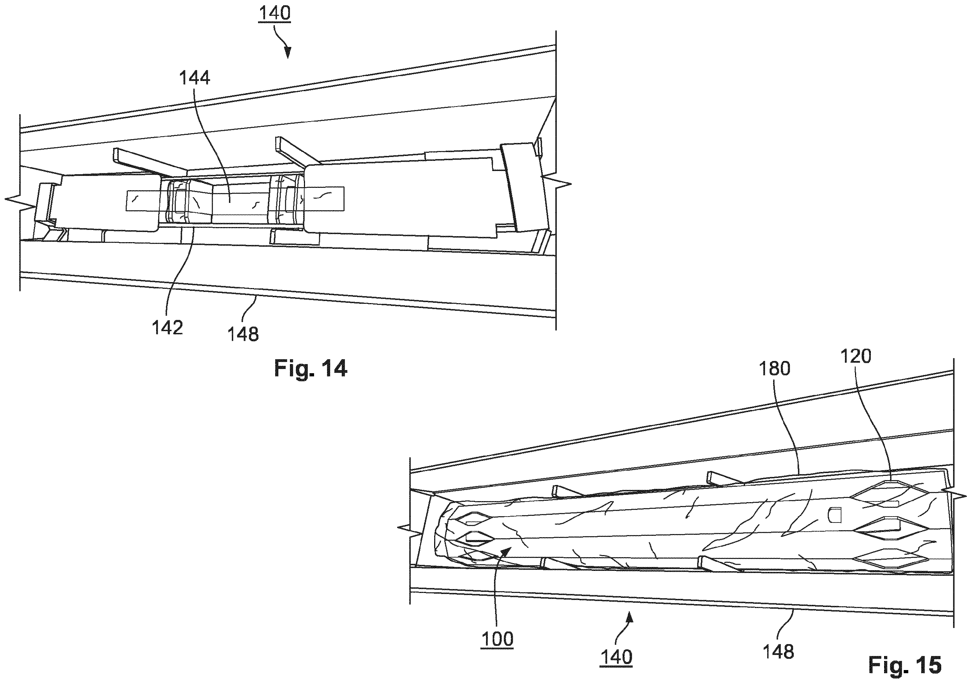

The installation kit 140 with the components as above-described is usable for different application areas and in particular needs to be transported to the respective area. For this purpose, the installation kit 140 also includes a box 148 used for transportation. **Fig. 14 and 15** show an example of the box 140 with a holding element 142. The holding element 142 can be in the form of a gantry that is positioned inside the box 148 and onto which the insulating housing 100 with the heating unit and heat shrink sleeve is positioned (Fig. 15). Fig. 15 also shows that the housing 100 is preferably wrapped in a polymeric sheet 180. The sheet 180 also remains around the housing 100 during the installation of the heat shrink sleeve and also improves the heat insulation around the insulating housing 100 such that a constant uniform heat distribution is achieved.

As shown, during the transportation of the insulating housing 100 the peripheral regions 120 are not contracted. When during transportation of the insulating housing 100, the housing 100 moves inside the box 148, the shape of the peripheral regions 120 and thus the heat insulation and centering around the cable can be affected. For example, an axial movement of the housing 100 along the length of the box 148 may cause a deformation of one of the peripheral regions 120. To prevent this, a compressible structure (not shown) is preferably attached to the insulating housing 100 and is arranged around at least a part of the insulating housing 100. Thereby, the compressible structure is arranged around the part of the insulating housing such that it encompasses the control unit 176. When the insulating housing with the compressible structure is positioned inside the box 148, the compressible structure engages with a pocket 144 in the holding element 142 to secure the insulating housing 100 against axial movements within the box 148. Additionally, the compressible structure also protects the control unit 176. The compressible structure can be in the form of foam.

The installation kit 140 as described above may further include a shape holder that is used during the transportation of the kit 140 in the box 148. Specifically, the installation kit includes at least one shape holder 150 that at least partially encompasses the perimeter of the outer surface of the insulating housing 100. The shape holder 150 can be of different shape and aims to prevent a deformation of the insulating housing 100. Examples for shape holders 150 are shown in **Fig. 17 and 18.** Fig. 16 and 17 show a simplified version of the insulating housing 100 without the peripheral regions such that the heat shrink sleeve 170 and the heating unit 174 are clearly visible.

The shape holders 150 are used to hold the insulating housing 100 and the heat shrink sleeve 170 and the heating unit 174 in a substantially rounded shape and to prevent a sinking of the components. This effect is exemplarily shown in Fig. 15 and 16. Fig. 15 shows the insulating housing 100 with the heat shrink sleeve 170 and the heating unit 174 from which a slight deformation in form of a sinking of the insulating housing into an oval shape can be seen. The deformation is often caused by the shape of the heating unit 174. Fig. 16 shows the same insulating housing 100 with shape holders 150 placed around the outer perimeter. The insulating housing 100 with the heat shrink sleeve 170 and the heating unit 174 is brought into a shape that forms a nearly rounded tube inside. In Fig. 16, the shape holder is exemplarily shown with a circular shape. Another example of the shape holder 150 is shown in Fig. 10 with a plurality of shape holders 150 being arranged along the length of the insulating housing 100. The shape holders 150 have a hexagonal shape that exactly matches the hexagonal shape of the insulating housing 100. If the insulation housing is in another polygonal form, the shape holders 150 may be adapted accordingly. Another example is shown in Fig. 18, with a shape holder 150 being channel shaped. An improved shaping is achieved when two channel-shaped shape holders 150 one from the top and one from the bottom are placed around the perimeter of the insulating housing 100.

The insulating housing 100, along with the shape holders 150, is placed inside the box 148 for transportation and storage. Maintaining this rounded shape throughout extended storage or transport ensures that when the insulating housing 100, the heat-shrink sleeve 170, and the heating unit 174 are positioned around a cable, they remain precisely centered.

This alignment allows for uniform spacing, ensuring that heat is evenly distributed around the cable during the shrinking process.

As mentioned in the beginning, the insulating housing with the heating unit and the heat shrink sleeve is mainly used to provide an insulating layer around a cable joint. In the description above, it was referred to the cable 190 around which the insulating housing is arranged. Correctly speaking, the housing is arranged around two cables that are connected and where a protection sleeve in form of the heat shrink sleeve should be provided at a connection area.

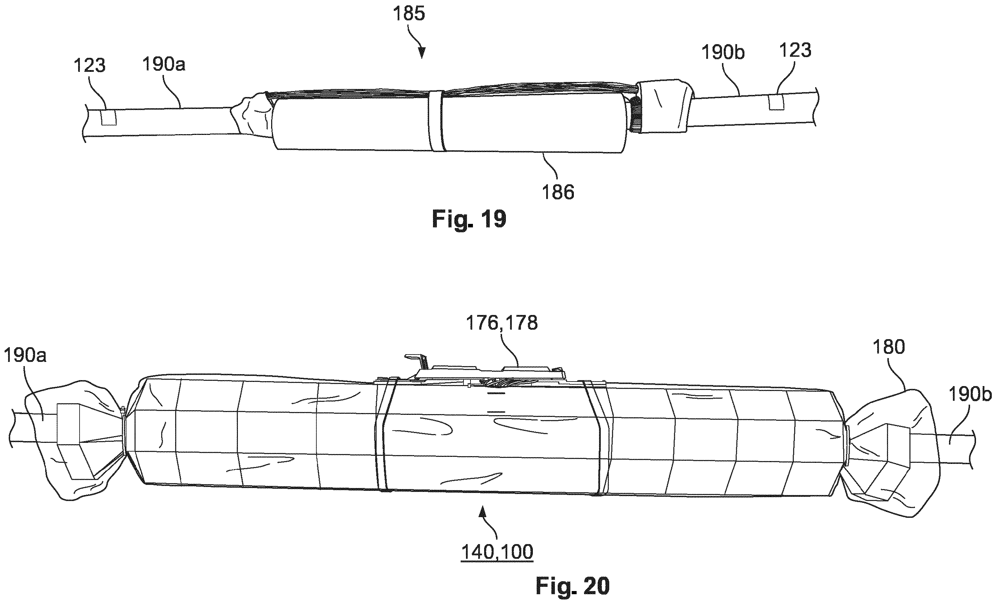

The installation and usage of the installation kit 140 with the insulating housing 100 according to the present invention will be described in the following with respect to **Fig. 19 and 20****.**

Fig. 19 shows two cables 190a and 190b that are to be connected with each other. Before the two cables are connected, the installation kit 140 is imposed over one cable and moved aside. The installation kit 140 here comprises the insulating housing 100, the heating unit 174, the heat shrink sleeve 170 and the control unit 176 arranged at the base plate 178. The two cables 190a, 190b are then connected at a connection area 185 with a joint body 186 that is provided at this connection area 185. The installation kit 140 is then moved over the connection area 185 and has to be aligned with the joint body 186. This means that the installation kit 140 with the heat shrink sleeve has to be aligned with respect to the two ends of the joint body 186 to ensure that the heat shrink sleeve is shrunken onto the correct position. The correct position of the installation kit 140 is marked on both cables 190a, 190b with markings 123. On each cable, one marking 123 denotes the preferred distance from the respective end of the joint body 186 to the corresponding edge of the later applied heat shrink sleeve.

When the installation kit 140 is moved and positioned over the connection area 185, the opening 122 in each peripheral region 120 of the housing 100 provides a clear view of the markings 123, allowing for precise alignment with these markings. This enhances the accuracy and ease of placement, ensuring that the installation kit 140 is consistently positioned correctly over the connection area 185.

Next, the peripheral regions at both edges are contracted such that the insulating housing with the heating unit and the heat shrink sleeve centers around both cables 190a, 190b and the heat shrink sleeve is evenly spaced from the cables. Fig. 20 shows an example of the peripheral regions having the cut-outs and form a candy-shaped end when being contracted. The contracted segments are fixed by a cable tie. Additionally, the polymeric sheet 180 is placed around the insulating housing 100. The heating unit is energized by the control unit 176 and heats up. The heat shrink sleeve will shrink into position at the connection area 185 and in particular around the joint body 186. As soon as the shrinking process is completed, the heating unit is turned off, and the installation kit 140 with the insulating housing 100 and the heating unit is opened and removed from the connection area.

The installation kit 140 with all components is manufactured as following. Since not all features are required for the functionality of the insulating housing and if these features are not provided as part of the kit, it is clear that the respective steps are omitted.

At first, the flat insulating housing with or without cut-outs as shown in Fig. 1 is provided. The heating unit and the heat shrink sleeve are both positioned on the insulating housing and are secured via the locking elements. The insulating housing is then folded along the plurality of grooves and encloses the heating unit and the heat shrink sleeve. The folded insulating housing is closed and the cables of the heating unit are passed to the outside, preferably, through the slit at one overlap region of the housing. The two overlap regions engage with each other and may interlock. The base plate with the control unit is then positioned over the distancing elements and fixed to them. The insulating housing is wrapped into the polymeric sheet and the compressible structure is attached to the housing such that it encompasses the control unit.

The insulating housing with the compressible structure is positioned inside the transportation box such that the compressible structure engages with the holding element inside the box. Before or after the insulating housing is positioned inside the box, the shape holders are arranged around the outer perimeter of the housing. When the shape holders are one-piece, the shape holders can be positioned around the housing before the compressible structure is arranged at the housing. When the shape holders are formed from two pieces such as for example, two channel-shaped shape holders, one part is already positioned inside the box and then the insulating housing is inserted into the box and the respective second shape holder is positioned on top of the other shape holder. Both shape holders together provide a complete enclosing around the perimeter of the insulating housing.

This complete installation kit 140 can then be transported to the required application and can also be stored as long as needed without affecting the performance.

| | **Reference numerals** |
|---|---|
| 100 | insulating housing |
| 102 | longitudinal axis |
| 103 | first diameter |
| 104 | distancing element |
| 110 | slit |
| 110 | main body |
| 111 | longitudinal grooves |
| 114 | locking element |
| 115 | liftable tab |
| 116 | protrusion from main body |
| 117 | flap |
| 118 | body of locking element |
| 120 | peripheral regions |
| 122 | opening |
| 123 | marking |
| 124 | segment of the peripheral region |
| 126 | diamond shaped cut-outs |
| 128 | tongue |
| 130 | overlap regions |
| 140 | installation kit |
| 142 | holding element |
| 144 | pocket in holding element |
| 148 | box for transporting |
| 150 | shape holder |
| 170 | heat shrink sleeve |
| 174 | heating unit |
| 176 | control unit |
| 177 | sharp projections |
| 178 | base plate |
| 179 | cables control unit |
| 180 | polymeric sheet |
| 185 | connection area |
| 186 | joint body |
| 190, 190a, 190b | cable |

## Claims

1. Insulating housing (100) for providing a heat insulation around a cable (190), the insulating housing (100) comprising:
a main body (110) having a plurality of longitudinal grooves (111) along a longitudinal axis (102) of the main body (110),
two peripheral regions (120),
wherein the main body (110) is arranged between the peripheral regions (120),
wherein the insulating housing (100) is foldable along the plurality of longitudinal grooves (111) to form an enclosure and
wherein each peripheral region (120) is configured to contact the cable (190).

2. Insulating housing (100) according to claim 1,
wherein the main body (110) comprises two overlap regions (130) arranged at opposite edges and extending along the longitudinal axis (102) of the main body (110).

3. Insulating housing (100) according to one of the preceding claims, wherein
the insulating housing (100) is foldable such that the two overlap regions (130) of the main body (110) engage with each other and form an opening (122) along the longitudinal axis (102) at each peripheral region (120).

4. Insulating housing (100) according to one of the preceding claims,
wherein the insulating housing (100) is foldable to form a polygonal cross-section having a first diameter (103) perpendicular to the longitudinal axis (102) of the main body (110).

5. Insulating housing (100) according to one of the preceding claims,
wherein the peripheral regions (120) are contractible to contact the cable (190).

6. Insulating housing (100) according to claim 5,
wherein, in a contracted state, the peripheral regions (120) have at least one segment (124) with a smaller diameter than the first diameter (103) of the main body (110).

7. Insulating housing (100) according to one of the preceding claims,
wherein each peripheral region (120) is formed with a plurality of cut-outs, optionally, wherein each peripheral region (120) has a plurality of diamond shaped cut-outs (126),
optionally, wherein each peripheral region (120) is in the form of a cap, optionally, wherein each peripheral region (120) is in the form of a plurality of tongues (128) extending along the longitudinal axis (102) of the main body (110).

8. Insulating housing (100) according to one of the preceding claims,
wherein the insulating housing (100) includes at least one distancing element (104) arranged at one overlap region (130) of the main body (110).
optionally, wherein the at least one distancing element (104) is formed from a plurality of layers.

9. Insulating housing (100) according to one of the preceding claims,
wherein the insulating housing (100) includes a slit (106) at one overlap region (130) of the main body (110),
optionally, wherein the slit (106) is in the form of a T-slit.

10. Insulating housing (100) according to one of the preceding claims,
wherein locking elements (114) are positioned on opposite edges of the main body,
wherein each locking element (114) includes a body (118) and a liftable tab (115) extending from the body (118), the liftable tab (115) is configured to form a gap between the liftable tab (115) and the body (118) to receive a component to be locked.

11. Insulating housing (100) according to one of the preceding claims
wherein the insulating housing (100) comprises cardboards or corrugated plastic boards.

12. Installation kit (140) for installing a heat shrink sleeve (170), the installation kit (140) comprising:
an insulating housing (100) according to one of the preceding claims,
a heat shrink sleeve (170),
a heating unit (174),
a control unit (176) arranged at a base plate (178),
wherein the insulating housing (100) encloses the heat shrink sleeve (170) and the heating unit (174); the heating unit (174) being arranged along an outer surface of the heat shrink sleeve (170),
wherein the heating unit (174) is electrically energizable by the control unit (176) to provide heat to the heat shrink sleeve (170).

13. Installation kit (140) according to claim 12,
wherein the base plate (178) is fixed to the at least one distancing element (104) of the insulating housing.

14. Installation kit (140) according to one of claims 12 or 13,
wherein the installation kit (140) includes a box (148) for transporting,
wherein the box (148) includes a holding element (142),
wherein a compressible structure is attachable to the insulating housing (100) and is arranged around at least a part of the insulating housing (100) to encompass the control unit (176),
wherein, during transportation, the compressible structure engages with the holding element (142) to secure the insulating housing (100) against axial movements within the box (148).

15. Installation kit (140) according to one of claims 12 to 14,
wherein the installation kit (140), during transportation, includes at least one shape holder (150) that at least partially encompasses the perimeter of the outer surface of the insulating housing (100) to prevent a deformation of the insulating housing (100),
optionally, wherein the shape holder (150) is channel-shaped,
optionally, wherein the shape holder (150) has a circular shape,
optionally, wherein the shape holder (150) has a hexagonal shape,
optionally, wherein the shape holder (150) has a rectangular shape.
